# EUROPÄISCHE PATENTSCHRIFT

(11) **EP 3 368 362 B1**
(45) Veröffentlichungstag und Bekanntmachung des Hinweises auf die Patenterteilung: **17.07.2019**
(21) Anmeldenummer: 16760067.5
(22) Anmeldetag: 01.09.2016
(51) Int. Cl.: B60K 15/03, B60K 15/035, F02M 25/08

(54) **VERFAHREN ZUM ÜBERPRÜFEN DER DICHTHEIT EINER KRAFTSTOFFVERSORGUNGSANLAGE**
METHOD FOR TESTING THE TIGHTNESS OF A FUEL SUPPLY SYSTEM
PROCÉDÉ DE CONTRÔLE DE L'ÉTANCHÉITÉ D'UN SYSTÈME D'ALIMENTATION EN CARBURANT

(30) Priorität: 28.10.2015 DE 102015221053
(43) Veröffentlichungstag der Anmeldung: 05.09.2018
(73) Patentinhaber: Bayerische Motoren Werke Aktiengesellschaft, 80809 München (DE)
(72) Erfinder: ARRAS, Emmanuel, 80637 München (DE); HUBER, Markus, 80995 München (DE)
(86) Internationale Anmeldenummer: PCT/EP2016/070665
(87) Internationale Veröffentlichungsnummer: WO 2017/071857

(56) Entgegenhaltungen:
- WO-A1-01/69073
- WO-A1-2016/012284
- DE-A1-102008 046 586
- DE-A1-102012 212 109
- DE-A1-102013 209 716
- US-A- 5 460 135
- US-A- 5 925 817

## Beschreibung

Die Erfindung betrifft ein Verfahren zum Überprüfen der Dichtheit einer Kraftstoffversorgungsanlage eines Kraftfahrzeugs mit einem Kraftstofftank, in dessen Innenraum ein Volumenveränderungselement vorgesehenen ist, dessen sog. Ausgleichs-Volumen üblicherweise und insbesondere unter Zwischenschaltung einer Speichereinheit für gasförmige Kraftstoffbestandteile mit der Umgebung in Verbindung steht, während der mit Kraftstoff für einen Verbraucher befüllbare Innenraum des Kraftstofftanks über eine Ventileinheit, welche üblicherweise beim Befüllen des Kraftstofftanks sowie bei Überschreiten eines Überdruck-Grenzwertes in der Größenordnung von bis zu 100 mbar und bei Unterschreiten eines Unterdruck-Grenzwertes ("Überdruck" und "Unterdruck" bezieht sich auf die Differenz zwischen dem Druck im Tank-Innenraum und dem Umgebungsdruck) geöffnet und ansonsten geschlossen ist, mit der Umgebung verbindbar ist. In der WO2016/012284, Stand der Technik nach Artikel 54 (3) EPÜ, ist eine solche Kraftstoffversorgungsanlage beschrieben.

Die gesetzlichen Anforderungen, welche an die Emissionsfreiheit von Kraftfahrzeug-Tanksystemen gestellt werden, sind mittlerweile extrem hoch. Unter nahezu sämtlichen denkbaren Umständen sollen unter Berücksichtigung unterschiedlicher länderspezifischer Vorschriften (die verschiedenen Staaten der Welt erlassen unterschiedliche Vorschriften) praktisch keine gasförmigen Kraftstoffbestandteile (üblicherweise handelt es sich hierbei um Kohlenwasserstoffe) aus dem Innenraum des Tanks in die Umgebung gelangen. Solche gasförmigen Kraftstoffbestandteile fallen in besonders großer Menge bekanntlich beim Befüllen des Kraftstoff-Tanks mit frischem Kraftstoff an, aber auch bei längerem Stillstand des Kraftfahrzeugs als Folge einer Temperaturerhöhung. In Verbindung mit letztgenanntem kennt der Fachmann den Begriff der "diurnal losses", d.h. der/die Verluste von gasförmigen Kraftstoffbestandteilen bzw. der/die Menge von gasförmigen Kohlenwasserstoff-Emissionen, welche bei längerem Stillstand des Kraftfahrzeugs aufgrund von Temperaturschwankungen (bspw. resultierend durch den Wechsel zwischen Tag und Nacht) aus dem Tank-Innenraum abgeführt werden müssen, um das Entstehen von unzulässig hohem Überdruck im Tank-Innenraum zu vermeiden. Abgeführt werden müssen aber auch Kohlenwasserstoff-Emissionen, die sich aufgrund von Temperaturänderungen im Betrieb des Kraftfahrzeugs im Tank bilden, wobei jeweils die Einhaltung des Dampfdruckgleichgewichts im Tank zu solchen Emissionen führt. Bekanntlich werden zumindest diese nicht beim Befüllen des Kraftstofftanks anfallenden Emissionen in einem Aktivkohlefilter oder dgl., welches vorliegend allgemein als Speichereinheit für gasförmige Kraftstoffbestandteile bezeichnet wird, solange zwischengespeichert, bis eine aus dem Kraftstofftank mit Kraftstoff versorgte (und üblicherweise als Fahrzeug-Antriebsaggregat vorgesehene) Brennkraftmaschine geeignet in Betrieb genommen wird, so dass dann diese Speichereinheit gespült werden kann, wobei die darin zwischengespeicherten Kraftstoffbestandteile der Brennkraftmaschine zur Verbrennung zugeführt werden. Der Vollständigkeit halber sei noch erwähnt, dass es länderspezifisch entweder üblich ist, die beim Befüllen des Tanks anfallenden Kohlenwasserstoff-Emissionen entweder während des Befüllens an der Tankstelle selbst abzusaugen (so bspw. in der Europäischen Union = "ECE-System") oder ebenfalls in einem dann ausreichend groß dimensionierten Aktivkohlefilter bzw. einer entsprechenden Speichereinheit (als ORVR = Onboard refueling vapor recovery bspw. in den USA vorgeschrieben) zu speichern.

Im Hinblick auf eine Vermeidung der geschilderten "diurnal losses" oder sonstiger betriebsbedingter Kohlenwasserstoffemissionen sind bereits Drucktanks vorgeschlagen oder in Serie, in welchen ein entsprechend hoher Überdruck (sowie ein geringer Unterdruck) herrschen kann, so dass von extremen Ausnahmefällen abgesehen keine Abfuhr von Kraftstoffdämpfen aus dem Tank erfolgen muss, jedoch sind solche Drucktanks sehr aufwändig. Weiterhin bekannt sind Maßnahmen zur Verringerung des Entstehens von gasförmigen Kraftstoffbestandteilen im Tank-Innenraum, insbesondere in Verbindung mit einem Befüllvorgang des Kraftstofftanks, vgl. bspw. die US 5,460,135. Für die USA gilt nämlich, dass sämtliche beim Befüllen eines Fahrzeug-Kraftstofftanks anfallenden gasförmigen Kohlenwasserstoffemissionen in einer fahrzeugeigenen Speichereinheit für gasförmige Kraftstoffbestandteile zwischengespeichert werden müssen. Um deren Menge zu reduzieren, ist in dieser genannten Schrift im Kraftstofftank ein flexibler Luftbeutel vorgesehen, welcher bei vollständig mit Kraftstoff befülltem Tank sein minimales Volumen besitzt und bei Entnahme von flüssigem Kraftstoff aus dem Tank kontinuierlich mit Umgebungsluft befüllt wird, während ein Entleeren dieses Luftbeutels verhindert wird. Damit kann sich oberhalb des Flüssigkeitsspiegels im Tank naturgemäß nur eine geringere Menge von Kraftstoffdämpfen bilden als in einem ansonsten gleichen Tank ohne einen derartigen Luftbeutel. In Zusammenhang mit einem neuerlichen Befüllen des Tanks wird dieser Luftbeutel dann durch den Speicherbehälter bzw. Aktivkohlefilter hindurch in die Umgebung entleert.

In der eingangs genannten WO2016/012284 ist eine Kraftstoffversorgungsanlage beschrieben, deren Funktionsprinzip auf der Erkenntnis aufbaut, dass aufgrund des Dampfdruck-Gleichgewichts in einem Kraftstofftank, welcher nahezu vollständig mit flüssigem Kraftstoff befüllt ist, oberhalb des Flüssigkeitsspiegels weniger gasförmige Kraftstoffbestandteile entstehen, als im gleichen Kraftstofftank, wenn dieser nur noch bspw. zur Hälfte oder noch weniger befüllt ist. Folglich kann mit einem flexiblen Luft-Beutel oder dgl., welcher oberhalb des durch flüssigen Kraftstoff im Tank-Innenraum gebildeten Flüssigkeitsspiegels vorgesehen ist, die Menge von im Tank-Innenraum in den gasförmigen Zustand übergehenden Kraftstoffbestandteilen verringert werden. In dieser besagten Patentanmeldung und auch vorliegend wird nun im Weiteren anstelle eines "Luft-Beutels" verallgemeinernd von einem Volumenveränderungselement gesprochen, welches ein veränderliches Ausgleichsvolumen besitzt bzw. einschließt, das mit der Umgebung in Verbindung steht bzw. stehen kann. So kann das Volumenveränderungselement quasi atmen, d.h. sich bedarfsgerecht vergrößern oder verkleinern und damit auf geänderte Randbedingungen reagieren.

Eine (weitere) gesetzliche Zulassungsvorschrift für Kraftfahrzeuge beispielsweise in den Vereinigten Staaten von Amerika ist, dass der gesamte Bereich der Kraftstoffversorgungsanlage, in welchem gasförmige Kraftstoffbestandteile vorliegen können, selbsttätig regelmäßig auf Dichtheit überprüft wird. Üblicherweise werden solche Dichtheitstests durch eine elektronische Steuereinheit bei jedem oder bei jedem zweiten Fahrzyklus des Kraftfahrzeugs durchgeführt. Dabei muss eine Undichtigkeitsstelle, bspw. in Form eines Loches mit einem Durchmesser von nur 0,5 mm, sofort entdeckt werden, und es muss die Existenz einer solchen Undichtigkeitsstelle dem Nutzer des Kraftfahrzeugs angezeigt werden. Hierfür wird gemäß üblichem Stand der Technik in demjenigen Bereich der Kraftstoffversorgungsanlage, in welchem gasförmige Kraftstoffbestandteile vorliegen können, der Druck und die Temperatur (der in diesem Bereich befindlichen Gase oder bei Anordnung von Sensoren in einem oberen Bereich des Kraftstofftanks, falls dieser vollständig befüllt ist, auch des dort befindlichen flüssigen Kraftstoffs) mittels geeigneter Sensoren über einen gewissen Zeitraum hinweg erfasst, wobei zu diesem besagten Bereich auch der Kraftstoffdampf-Zwischenspeicher gehört.

Hiermit soll nun für eine Kraftstoffversorgungsanlage gemäß der vorgenannten WO2016/012284 ein geeignetes Verfahren zum Überprüfen von deren Dichtheit aufgezeigt werden (= Aufgabe der vorliegenden Erfindung).

Die Lösung dieser Aufgabe ist für ein Verfahren nach Anspruch 1 wobei, mittels einer Gas-Fördervorrichtung sequentiell und somit nicht gleichzeitig
(a) bei gegenüber der Umgebung abgesperrtem Volumenveränderungselement im Tank-Innenraum ein Differenzdruck gegenüber Umgebung erzeugt wird, und
(b) bei nicht gegenüber der Umgebung abgesperrtem Volumenveränderungselement im Volumenveränderungselement oder im Tank-Innenraum ein Differenzdruck gegenüber Umgebungsdruck erzeugt wird,
wobei der erzeugte Differenzdruck aus (a) und der erzeugte Differenzdruck aus (b) durch Schalten geeigneter Absperrventile gehalten und über eine gewisse Zeitspanne überwacht oder nach einer gewissen Zeitspanne kontrolliert wird,
und wobei dann, wenn der Differenzdruck nach dieser Zeitspanne noch einen gewissen Schwellwert überschreitet, auf eine ausreichende Dichtheit der Kraftstoffversorgungsanlage geschlossen wird.

Vorteilhafte Weiterbildungen sind Inhalt der Unteransprüche.

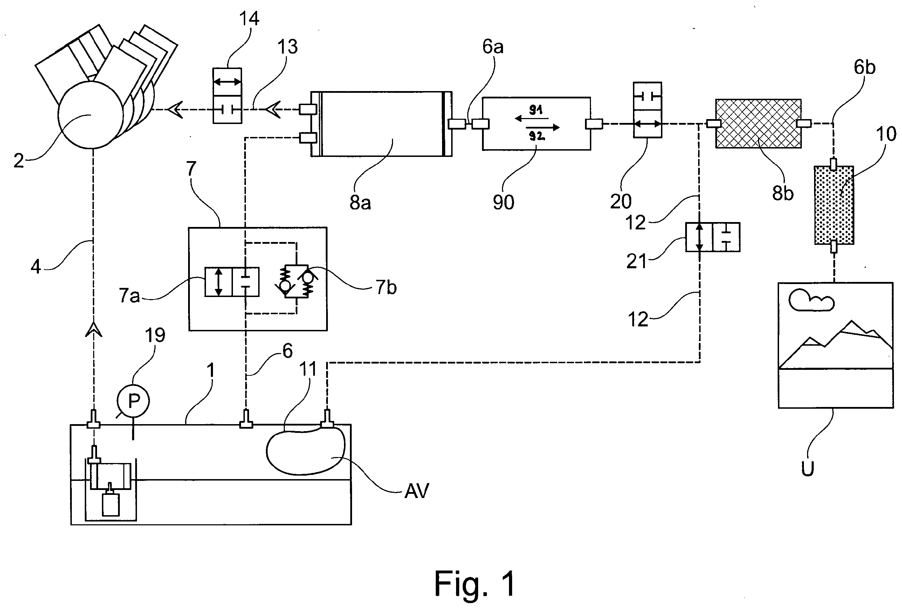

Eine für die vorliegende Erfindung relevanten Kraftstoffversorgungsanlage ist z.B. aus WO2016/012284 bekannt. Daher werden an späterer Stelle zwei Ausführungsbeispiele für die vorliegende Erfindung ausgehend von einer Kraftstoffstoffversorgungsanlage beschrieben, die in Figur 1 der vorstehend genannten WO2016/01228 beschrieben ist.

Erfindungsgemäß erfolgt eine Dichtheitsprüfung einer solchen oder einer dieser vergleichbaren Kraftstoffversorgungsanlage dadurch, dass zum Einen in einem Teil dieser Kraftstoffversorgungsanlage, welcher das besagte Volumenveränderungselement nicht umfasst, eine Dichtheitsprüfung durchgeführt wird, wobei das Volumenveränderungselement bzw. dessen sog. Ausgleichs-Volumen nicht mit der Umgebung in Verbindung steht, um irgendwelche Einflüsse desselben auf diesen Teil der Kraftstoffversorgungsanlage auszuschließen. Weiterhin wird eine Dichtheitsprüfung für das Volumenveränderungselement bzw. für den anderen, dieses Volumenveränderungselement umfassenden Teil der Kraftstoffversorgungsanlage durchgeführt, wobei dies entweder direkt oder indirekt erfolgen kann, wie im Folgenden erläutert wird. Grundsätzlich wird dabei für jede Dichtheitsprüfung mittels einer Gas-Fördervorrichtung (insbesondere in Form einer elektromotorisch angetriebenen Luftpumpe) in einem Teil der Kraftstoffversorgungsanlage ein gewisser (vorgegebener) Differenzdruck (gegenüber Umgebungsdruck) erzeugt, woraufhin die Gas-Fördervorrichtung abgeschaltet wird und dieser erzeugte Differenzdruck (bspw. Unterdruck) durch Absperren geeigneter Ventile im jeweiligen Teil der Kraftstoffversorgungsanlage für eine gewisse Zeitspanne bestehen bleiben sollte, falls dieser Teil der Kraftstoffanlage ausreichend dicht ist. Demzufolge wird der Wert dieses Differenzdrucks (bspw. Unterdrucks) zumindest nach Ablauf einer gewissen (vorgegebenen) Zeitspanne erneut abgefragt bzw. überprüft. Falls eine Änderung dieses Differenzdruck-Wertes unterhalb eines gewissen geeignet vorgegebenen Druck-Betrages liegt, kann der jeweilige Teil der Kraftstoffversorgungsanlage folglich als ausreichend dicht betrachtet werden; andernfalls besteht ein berechtigter Verdacht auf Undichtigkeit.

Zur Überprüfung der Dichtheit des das Volumenveränderungselement nicht umfassenden Teils der Kraftstoffversorgungsanlage, d.h. im Tank einschließlich der Speichereinheit für Kraftstoffdämpfe und deren Spülleitung wird mittels der Gas-Fördervorrichtung in diesem Teil ein Differenzdruck zu und vorzugsweise ein Überdruck gegenüber Umgebungsdruck erzeugt. Zur Überprüfung der Dichtheit des Volumenveränderungselements bzw. des anderen dieses umfassenden Teils der Kraftstoffversorgungsanlage kann entweder im Volumenveränderungselement selbst - dies ist dann eine weiter genannte "direkte" Überprüfung - oder im Kraftstofftank, d.h. im Tank-Innenraum ein Differenzdruck gegenüber Umgebungsdruck erzeugt werden, wobei letzteres eine "indirekte" Überprüfung ist. Wenn nämlich in einem der Überprüfung der Dichtheit des Volumenveränderungselementes vorhergehenden Verfahrens-Schritt der Kraftstofftank als dicht erkannt wurde und daraufhin im Innenraum des Tanks bspw. ein Unterdruck erzeugt wird, wird dieser dann, wenn ein undichtes Volumenveränderungselement zur Umgebung hin nicht abgesperrt ist, zwangsläufig durch Umgebungsluft, welche durch das undichte Volumenveränderungselement in den Tank-Innenraum gelangt, abgebaut.

Nach einer besonders vorteilhaften Ausführungsform der vorliegenden Erfindung ist für die Überprüfung der beiden besagten Teile der Kraftstoffversorgungsanlage eine einzige Gas-Fördervorrichtung vorgesehen; bspw. mittels geeignet schaltbarer Ventile kann diese wahlweise einem der beiden Teile der Kraftstoffversorgungsanlage zugeordnet werden. Es kann die Gas-Fördervorrichtung mit umkehrbarer Förderrichtung ausgeführt sein, so dass damit wahlweise Überdruck oder Unterdruck erzeugt werden kann. Beispielsweise kann in einem ersten Schritt eines erfindungsgemäßen Verfahrens mit einer solchen Gas-Fördervorrichtung im Tank-Innenraum und in mit diesem zusammenhängenden Fluid-Leitungen durch Förderung von Luft aus der Umgebung ein gewisser Überdruck erzeugt werden und nach positivem Abschluss dieses ersten Teils des Überprüfungsverfahrens in einem zweiten Schritt mit der gleichen Gas-Fördervorrichtung im Tank-Innenraum ein Unterdruck erzeugt werden, um die im vorhergehenden Absatz erläuterte indirekte Dichtheits-Überprüfung für das Volumenveränderungselement durchzuführen. Alternativ kann es jedoch aufgrund irgendeines anderen Kriteriums vorteilhaft sein, wenn für jeden der besagten Teile der Kraftstoffversorgungsanlage eine eigenständige Gas-Fördervorrichtung (mit Luft-Versorgung aus der Umgebung) vorgesehen ist, die dann vorzugsweise zeitlich nacheinander in Betrieb genommen werden.

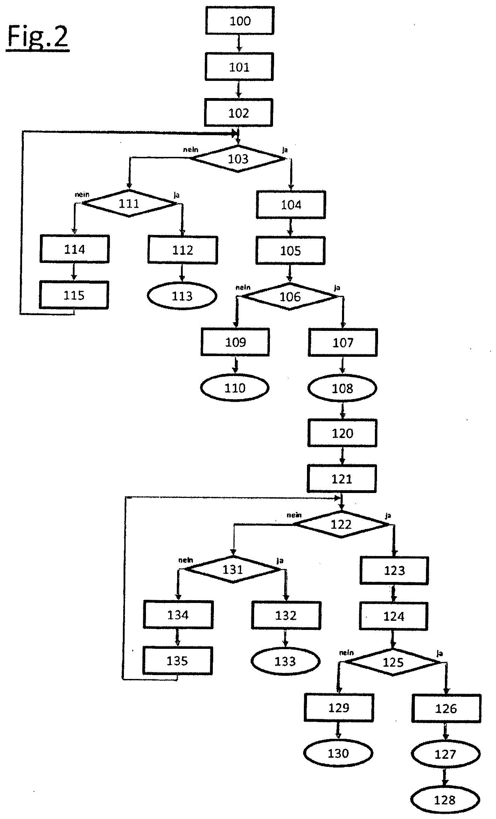

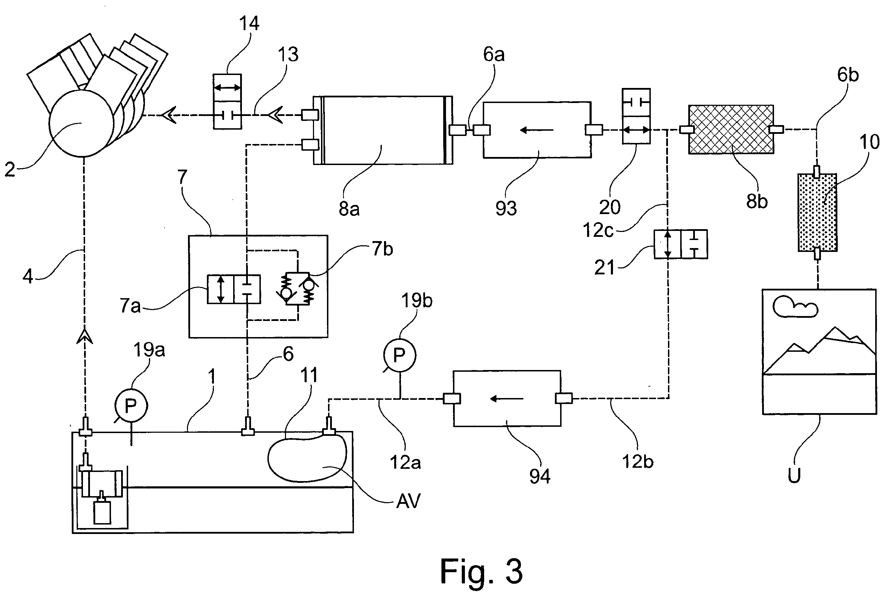

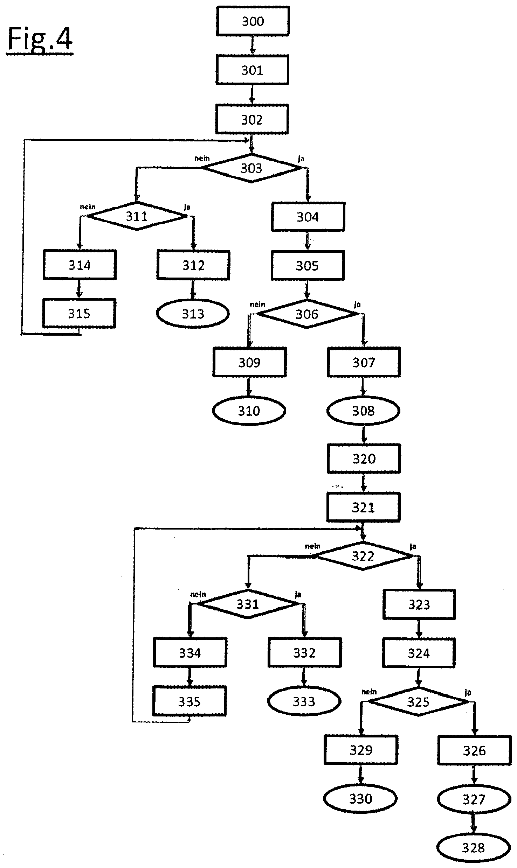

Im Folgenden wird die Erfindung anhand zweier Ausführungsbeispiele weiter erläutert, wobei die beigefügte **Figur 1** (angelehnt an Fig.1 der o.g. WO2016/012284 und unter Verwendung der dortigen Bezugsziffern) in einer Prinzipdarstellung eine Kraftstoffversorgungsanlage zeigt, bei der ein erfindungsgemäßes Dichtheits-Überprüfungsverfahren durchgeführt wird bzw. durchgeführt werden kann, welches als Ablaufdiagramm eines in einer elektronischen Steuereinheit installierten Computerprogramms in **Figur 2** dargestellt ist. Ferner zeigt die beigefügte **Figur 3** (angelehnt an Fig.1 der WO2016/012284 und unter Verwendung der dortigen Bezugsziffern) in einer Prinzipdarstellung eine Kraftstoffversorgungsanlage, bei der ein alternatives erfindungsgemäßes Dichtheits-Überprüfungsverfahren durchgeführt wird bzw. durchgeführt werden kann, welches als Ablaufdiagramm eines in einer elektronischen Steuereinheit installierten Computerprogramms in **Figur 4** dargestellt ist.

In den Ablaufdiagrammen (Fig.2, Fig.4) stellen Rechtecke Aktionen (der elektronischen Steuereinheit) dar, während mit einer Raute eine (von der Steuereinheit) durchgeführte Abfrage und mit einer Ellipse ein (von der Steuereinheit) aufgefundenes Ergebnis gekennzeichnet ist. Die Ziffern 100 folgende stehen für einzelne im weiteren beschriebene Verfahrens-Schritte. Zunächst auf **Fig.1** Bezug nehmend trägt ein Tank bzw. Kraftstoff-Tank eines Kraftfahrzeugs die Bezugsziffer 1 und eine aus diesem Tank mit Kraftstoff versorgte Brennkraftmaschine die Bezugsziffer 2. Zu dieser gelangt der mittels einer im Tank 1 vorgesehenen (nicht gezeigten) Pumpeneinheit geförderte Kraftstoff über eine Versorgungsleitung 4. Der Einfachheit halber nicht gezeigt ist ein Befüllstutzen, über den Kraftstoff in den Tank 1 nachgefüllt werden kann.

Eine Tankentlüftungsleitung 6 führt vom Innenraum des Tanks 1 durch eine Ventileinheit 7 zu einer ersten mit einem Adsorptionsmittel für gasförmige Kraftstoffbestandteile befüllten Speichereinheit 8a bzw. es mündet die Entlüftungsleitung 6 im Innenraum einer als sog. Aktivkohlefilter fungierenden mit der Bezugsziffer 8a gekennzeichneten Speichereinheit für gasförmige und über die Entlüftungsleitung 6 bei geöffneter Ventileinheit 7 aus dem Tank-Innenraum abgeführte gasförmige Kraftstoffbestandteile. Am anderen Ende dieser ersten Speichereinheit 8a setzt sich die Entlüftungsleitung 6 als Leitung 6a fort und mündet nach Passieren einer Gas-Fördervorrichtung 90, welche derart ausgebildet ist, dass auch bei nicht in Betrieb genommener Gas-Fördereinrichtung 90 ein Gasstrom durch diese hindurch strömen kann, sowie eines Absperr-Ventils 20 in einer zweiten auch als "Honeycomb" oder "Low-Bleed-Emission-Aktivkohlefilter" bezeichneten Speichereinheit 8b für gasförmige Kraftstoffbestandteile, welche ebenfalls eine Aktivkohle, jedoch mit anderen Speichereigenschaften enthält. Aus dieser zweiten Speichereinheit 8b austretend führt die Tankentlüftungsleitung 6 als Leitung 6b weiter durch ein Staubfilter 10 in die Umgebung U. Weiterhin ist ein Drucksensor 19 vorgesehen, mit welchem der Innendruck im Tank 1 gemessen werden kann.

Im Innenraum des Tanks 1 ist ein hier (bei den Ausführungsbeispielen nach den Figuren 1, 3) als flexible und auch elastisch verformbare Blase ausgeführtes Volumenveränderungselement 11 vorgesehen, das in sich ein Ausgleichs-Volumen AV einschließt, welches über eine Belüftungsleitung 12 mit der Umgebung U in Verbindung gebracht werden kann bzw. üblicherweise mit der Umgebung in Verbindung steht. Hierfür durchdringt die im Ausgleichs-Volumen AV des Volumenveränderungselements 11 mündende Belüftungsleitung 12 die Wand des Tanks 1 und mündet schließlich in der Leitung 6a, welche wie bereits erläutert die erste Speichereinheit 8a mit der zweiten Speichereinheit 8b verbindet. Damit ist diese Belüftungsleitung 12 durch die Speichereinheit 8b für gasförmige Kraftstoffbestandteile hindurch mit der Umgebung U verbunden, falls ein in dieser Belüftungsleitung 12 vorgesehenes Absperrventil 21, welches auch als Blase-Absperrventil 21 bezeichnet wird, geöffnet ist. Diesen Offen-Zustand nimmt das Absperrventil vorzugsweise im elektrisch stromlosen Zustand ein, während es mit elektrischer Bestromung in den geschlossenen Zustand gebracht wird. Während die Funktion dieses Absperrventils 21 später erläutert wird (und für die Durchführung des erfindungsgemäßen Überprüfungs-Verfahrens benötigt wird), ist die Funktion des besagten Volumenveränderungselements 11 in der vorliegenden Beschreibungseinleitung kurz und in der bereits mehrfach genannten WO2016/012284 ausführlich erläutert. Letzteres gilt auch für die Funktion der auch als Niederdruck-Tankabsperrventil bezeichneten Ventileinheit 7, welche hier durch eine Parallelschaltung zweier Ventilelemente 7a, 7b gebildet ist.

Beim ersten Ventilelement 7a handelt es sich um ein von einer elektronischen Steuereinheit ansteuerbares Sperrventil, das üblicherweise beim Betanken (= Befüllen das Tanks 1 mit frischem Kraftstoff) und bei Überschreitung eines vorgegebenen Grenzdrucks im Tank 1 in seine Offenstellung gebracht wird und ansonsten geschlossen ist. Insbesondere im Hinblick auf das Vermeiden einer Grenzdruck-Überschreitung (sowohl bezüglich Überdruck als auch bezüglich Unterdruck) wird das erste Ventilelement 7a von einem die Temperatur T im Tank 1 messenden Sensor *(nicht gezeigt)* in Kombination mit einem den Druck P im Tank 1 messenden Sensor 19 geeignet angesteuert, während ein bevorstehender oder durchgeführter Betankungsvorgang beispielsweise über eine vom Nutzer des Kraftfahrzeugs zu betätigende Betankungswunschtaste oder einen Tankklappensensor erkannt werden kann.

Beim zweiten Ventilelement 7b handelt es sich hier um eine Paarung von parallel geschaltet einander entgegen gerichteten Rückschlagventilen, welche erst bei Vorliegen eines Mindestdrucks selbsttätig öffnen. Diese Rückschlagventile bzw. dieses zweite Ventilelement 7b sind/ist solchermaßen ausgelegt, dass diese erst bei Druckwerten im Innenraum des Tanks 1 (abseits des Volumenveränderungselements 11), welche betragsmäßig um bspw. 100 mbar vom in der Umgebung herrschenden Druck beabstandet sind, öffnen bzw. öffnet, d.h. dieses zweite (dem ersten Ventilelement 7a funktional parallel geschaltete) Ventilelement 7b der Ventileinheit 7 öffnet dann, wenn im Tank-Innenraum entweder ein Überdruck von ca. 100 mbar herrscht, wonach Kraftstoffdämpfe aus dem Tank-Innenraum in die beiden Speichereinheiten 8a, 8b gelangen, wo die gasförmigen Kraftstoffbestandteile zurückgehalten werden, während die Luft in die Umgebung U gelangt, welcher Überdruck damit abgebaut wird, oder wenn im Tank-Innenraum ein Unterdruck von bspw. ca. 100 mbar herrscht, wonach Luft aus der Umgebung durch die Speichereinheiten 8a, 8b in den Tank-Innenraum gelangt, welcher Unterdruck damit abgebaut wird. Abweichend von vorstehender Erläuterung können die Rückschlagventile des Ventilelements 7b hinsichtlich ihres Öffnens aber auch auf verschiedene Differenzdruckwerte hin und/oder andere Absolutwerte ausgelegt sein, derart, dass das Ventilelement 7b vom Tank 1 zur Umgebung U (bzw. zur Speichereinheit 8a) hin erst dann öffnet, wenn im Tank ein Überdruck-Grenzwert von bspw. 70 mbar erreicht ist, während das Ventilelement 7b von der Umgebung U (bzw. von der Speichereinheit 8a) zum Tank 1 hin erst dann öffnet, wenn im Tank ein Unterdruck-Grenzwert erreicht ist, der betragsmäßig geringer oder nicht höher als der vorstehend genannte Überdruck-Grenzwert ist und bspw. in der Größenordnung von 30 mbar liegen kann. Die Größenordnung, innerhalb derer sinnvolle Druckwerte liegen, erstreckt sich in einem Bereich von circa 5 mbar bis ca. 100 mbar.

Bei Stillstand des Kraftfahrzeugs über eine praktisch unbegrenzte oder zumindest größere Zahl von Tagen hinweg soll jedoch an einem solchen Tanksystem diese Ventileinheit 7 überhaupt nicht öffnen. Vielmehr erfolgt dann die Kompensation des aufgrund unterschiedlicher Umgebungstemperaturen (insbesondere durch Tag und Nacht) unterschiedlichen Volumens des im Tank-Innenraum befindlichen Kraftstoffs bzw. von dessen Dampfdruckänderung alleine durch eine Volumenänderung des Volumenveränderungselements 11, welches hierfür über die offene Belüftungsleitung 12 (d.h. üblicherweise, nämlich mit Ausnahme der Durchführung des vorliegend beanspruchten Überprüfungsverfahrens ist das darin vorgesehene Absperrventil 21 geöffnet) sowie die zweite Speichereinheit 8b entweder Luft aus dem Ausgleichs-Volumen AV des Volumenveränderungselements 11 an die Umgebung abgibt oder aus der Umgebung U aufnimmt. Dieser Prozess des Sich-Ausdehnens des Volumenveränderungselements 11 bei einer Vergrößerung des Ausgleichs-Volumens AV bzw. des Sich-Verkleinerns des Volumenveränderungselements 11 bei einer Verringerung des Ausgleichs-Volumens AV durch Luftaustausch mit der Umgebung U kann sich bei geeigneter Dimensionierung der betroffenen Bauelemente praktisch unendlich fortsetzen, ohne dass eine zunehmende Verdunstung von Kraftstoff im Tank 1 ein Öffnen der Ventileinheit 7 erforderlich macht.

Im Übrigen erfolgt ein Spülen bzw. Regenerieren der Speichereinheiten 8a, 8b, welche neben der Aufnahme von durch die Wand des Volumenveränderungselements 11 in dessen Ausgleichs-Volumen AV hinein diffundierenden Kraftstoffbestandteilen insbesondere bei einer Betankung, d.h. Befüllung des Tanks 1 mit frischem Kraftstoff und ggf. bei Überschreiten von Druckgrenzwerten im Tank 1 mit Kraftstoffdämpfen beaufschlagt werden, wie bei heutigen Tanksystemen üblich. Bei in Betrieb befindlicher Brennkraftmaschine 2 gelangt für das Spülen der Speichereinheiten 8a, 8b Luft aus der Umgebung U über die Leitung 6b in die zweite Speichereinheit 8b und weiter durch die Leitung 6a und die erste Speichereinheit 8a durch eine Spülleitung 13, in der ein dann offenes, aber ansonsten geschlossenes Spülventil 14 vorgesehen ist, in die Brennräume der Brennkraftmaschine 2, wo die in den beiden Speichereinheiten 8a, 8b zuvor zwischengespeicherten und von der Spül-Luft mitgenommenen gasförmigen Kraftstoffbestandteile verbrannt werden.

Nach dieser Vor-Erläuterung wird nun anhand von Figur 2 eine erfindungsgemäße Prozedur zum Überprüfen der Dichtheit des Kraftstoffversorgungsanlage nach Fig.1 beschrieben, die von einer elektronischen Rechen- und Steuereinheit wie folgt durchgeführt wird:

| | |
|---|---|
| 100 | Start der Überprüfungsprozedur, bspw. aufgrund einer Außerbetriebnahme oder Inbetriebnahme des Kraftfahrzeugs oder des Verbrauchers (bzw. Verbrennungsmotors 2) |
| 101 | die Ventileinheit 7, genauer dessen Ventilelement 7a, welches im stromlosen Zustand geschlossen ist, wird geöffnet und das im stromlosen Zustand offene Blase-Absperrventil 21 wird geschlossen, um zu verhindern, dass das Volumenveränderungselement 11 irgendeinen Einfluss auf den nun folgenden Teil des Überprüfungsverfahrens ausübt |
| 102 | die Gas-Fördereinrichtung 90 wird in der in Fig.1 durch den Pfeil 91 dargestellten Förderrichtung in Betrieb genommen und fördert damit unter anderem durch das stromlos und somit üblicherweise offene Absperrventil 20 Luft aus der Umgebung U in den Innenraum des Kraftstoff-Tanks 1; mit bzw. ab dieser Inbetriebnahme wird auch die zeitliche Betriebsdauer der Gas-Fördereinrichtung 90 gemessen |
| 103 | es wird geprüft, ob der mittels des Drucksensors 19 gemessene Überdruck im Tank-Innenraum größer als bspw. 10 Millibar ist |
| 104 | bejahendenfalls wird das Absperrventil 20 geschlossen und die Gas-Fördereinrichtung 90 still gesetzt |
| 105 | es wird eine vorgegebene Zeitspanne, bspw. in der Größenordnung von 1 Minute, abgewartet |
| 106 | es wird (mittels des Drucksensors 19) geprüft, ob im Kraftstofftank 1 noch ein Überdruck von (bspw.) zumindest 5 mbar (gegenüber Umgebungsdruck) vorliegt - dieser vorgegebene Betrag, der einen Schwellwert bezüglich des Ergebnisses des Überprüfungsverfahrens darstellt, liegt zwangsläufig unter dem im Verfahrensschritt 103 genannten bzw. berücksichtigten Betrag |
| 107 | bejahendenfalls wird zunächst das Absperrventil 20 geöffnet und bspw. eine Sekunde später wird das Ventilelement 7a der Ventileinheit 7 geschlossen sowie das Blase-Absperrventil 21 geöffnet, um den üblichen Betriebszustand wieder herzustellen (sowie den sich an den Verfahrensschritt 108 anschließenden Verfahrensteil vorzubereiten) |
| 108 | damit können der Kraftstoff-Tank 1 sowie die Speichereinheit 8a und die zugehörigen Leitungen einschließlich der Spülleitung 13 als ausreichend dicht eingestuft werden |
| 109 | wird hingegen im Schritt 106 erkannt, dass der Druck im Tank-Innenraum unterhalb des dort vorgegebenen Betrags von bspw. 5 mbar liegt, so wird zwar analog dem Schritt 107 der übliche Betriebszustand wieder hergestellt, aber es kann dann nicht auf Dichtheit geschlossen werden |
| 110 | vielmehr wird dann der den Kraftstoff-Tank 1 sowie die Speichereinheit 8a und die zugehörigen Leitungen einschließlich der Spülleitung 13 umfassende Teilbereich der Kraftstoffversorgungsanlage als nicht ausreichend dicht eingestuft (und es wird dies bspw. dem Nutzer des Kraftfahrzeug wie bislang üblich mitgeteilt) |
| 111 | falls im Schritt Verfahrensschritt 103 festgestellt wird, dass der durch vorhergehende Inbetriebnahme der Gas-Fördervorrichtung 90 erzeugte Überdruck im Tank-Innenraum den gewünschten Wert von bspw. 10 Millibar (noch) nicht erreicht hat (und somit betragsmäßig unterhalb diesem bleibt), so wird abgefragt, ob die Gas-Fördervorrichtung 90 bereits seit 30 Sekunden in Betrieb ist, d.h. ob seit Ausführung des Verfahrensschrittes 102 bereits 30 Sekunden vergangen sind |
| 112 | bejahendenfalls wird die Gas-Fördereinrichtung 90 still gesetzt, da davon ausgegangen werden kann, dass der gewünschte Druckaufbau im Tank 1 wegen irgendeiner Undichtigkeit nicht erfolgen kann |
| 113 | folglich wird dann der den Kraftstoff-Tank 1 sowie die Speichereinheit 8a und die zugehörigen Leitungen einschließlich der Spülleitung 13 umfassende Teilbereich der Kraftstoffversorgungsanlage als nicht ausreichend dicht eingestuft |
| 114 | wird hingegen im Verfahrensschritt 111 festgestellt, dass die Gas-Fördervorrichtung 90 noch weniger als 30 Sekunden in Betrieb ist, wird ein Zeitzähler für deren Betriebsdauer um den Wert "1" erhöht und es wird im folgenden Verfahrensschritt |
| 115 | die Gas-Fördervorrichtung 90 für eine Sekunde weiter betrieben, wonach zum Verfahrensschritt 103 zurückgegangen wird, in welchem die Abfrage erfolgt, ob der mittels des Drucksensors 19 gemessene Überdruck im Tank-Innenraum größer als bspw. 10 Millibar ist |

Nunmehr auf den Verfahrensschritt 108 zurückkommend, wird im Weiteren bzw. sich hieran anschließend die Dichtheit des Volumenveränderungselements 11 überprüft. Dies geschieht nur im Anschluss an eine erfolgreiche (d.h. ausreichende Dichtheit bescheinigende) Durchführung des Überprüfungsverfahrens für den Kraftstoff-Tank 1 sowie die Speichereinheit 8a und die zugehörigen Leitungen einschließlich der Spülleitung 13 auf weiter oben genannte "indirekte" Weise in folgenden Schritten:

| | |
|---|---|
| 120 | die Ventileinheit 7, genauer dessen Ventilelement 7a, welches im stromlosen Zustand geschlossen ist, wird geöffnet |
| 121 | die Gas-Fördereinrichtung 90 wird in der in Fig.1 durch den Pfeil 92 dargestellten (und somit der Förderrichtung aus dem Verfahrensschritt 102 entgegen gerichteten) Förderrichtung in Betrieb genommen und fördert damit unter anderem die zuvor (nämlich in den Verfahrensschritten 102, 103, und ggf. 111, 114, 115) in den Tank 1 geförderte Luft aus diesem heraus teilweise in den Innenraum des Volumenveränderungselements 11, insbesondere jedoch in die Umgebung U, was aber unschädlich ist, da die aus dem Tank 1 abgeführte Luft zuvor durch die Speichereinheiten 8a, 8b geführt wird; dabei wird mit bzw. ab dieser Inbetriebnahme auch die zeitliche Betriebsdauer der Gas-Fördereinrichtung 90 gemessen |
| 122 | es wird geprüft, ob der mittels des Drucksensors 19 gemessene und durch das weitere Absaugen von Luft bzw. Gas aus dem Tank-Innenraum erzeugte Unterdruck im Innenraum des Tanks 1 kleiner als bspw. 10 Millibar (gegenüber Umgebungsdruck) ist; dabei bedeutet "kleiner" hier, dass der Betrag des Unterdrucks größer als 10 Millibar ist |
| 123 | bejahendenfalls wird das Absperrventil 20 geschlossen und die Gas-Fördereinrichtung 90 still gesetzt |
| 124 | es wird eine vorgegebene Zeitspanne, bspw. in der Größenordnung von 1 Minute, abgewartet |
| 125 | mittels des Drucksensors 19 wird geprüft, ob im Kraftstoff-Tank 1 noch ein Unterdruck von (bspw.) zumindest 5 mbar (gegenüber Umgebungsdruck) vorliegt - dieser vorgegebene Betrag, der einen Schwellwert bezüglich des Ergebnisses des Überprüfungsverfahrens darstellt, liegt unter dem im Verfahrensschritt 122 genannten bzw. berücksichtigten Betrag, da im Falle einer Undichtheit des Volumenveränderungselements 11 ja Luft aus diesem in den Tank-Innenraum gelangen würde und den dort zunächst vorliegenden Unterdruck signifikant reduzieren würde |
| 126 | bejahendenfalls wird zunächst das Absperrventil 20 geöffnet und bspw. eine Sekunde später wird das Ventilelement 7a der Ventileinheit 7 geschlossen, um den üblichen Betriebszustand wieder herzustellen |
| 127 | nachdem im Schritt 125 noch ausreichender Unterdruck im Tank-Innenraum herrscht (und dieser folglich nicht über ein undichtes Volumenveränderungselement 11 signifikant abgebaut worden ist) kann das Volumenveränderungselement 11 als ausreichend dicht eingestuft werden |
| 128 | die bislang erfolgreiche Überprüfungsprozedur wird damit abgeschlossen, denn es sind gemäß Schritt 108 sowohl der Kraftstoff-Tank 1 sowie die Speichereinheit 8a und die zugehörigen Leitungen einschließlich der Spülleitung 13 als auch das Volumenveränderungselement 11 ausreichend dicht |
| 129 | wird hingegen im Schritt 125 erkannt, dass der Druck im Tank-Innenraum oberhalb des dort vorgegebenen Unterdruck-Schwellwertes von bspw. 5 mbar liegt, d.h. dass beispielsweise nur ein Unterdruck von 1 mbar oder sogar Umgebungsdruck im Tank 1 herrscht, was im Falle eines undichten Volumenveränderungselements 11 grundsätzlich möglich ist, da durch die Belüftungsleitung 12 mit geöffnetem Absperrventil 21 sowie ein undichtes Volumenveränderungselement 11 Umgebungsluft in den Innenraum des Tanks 1 gelangen kann, so wird zwar analog dem Schritt 126 der übliche Betriebszustand wieder hergestellt, aber es kann dann nicht auf Dichtheit des Volumenveränderungselements 11 geschlossen werden |
| 130 | vielmehr wird dann das Volumenveränderungselement 11 bzw. der dieses umfassende Teilbereich der Kraftstoffversorgungsanlage als nicht ausreichend dicht eingestuft |
| 131 | falls im Verfahrensschritt 122 festgestellt wird, dass der durch vorhergehende Inbetriebnahme der Gas-Fördervorrichtung 90 erzeugte Unterdruck im Tank-Innenraum den gewünschten Wert von bspw. 10 Millibar nicht erreicht, so wird abgefragt, ob die Gas-Fördervorrichtung 90 bereits seit bspw. 300 Sekunden in Betrieb ist, d.h. ob seit Ausführung des Verfahrensschrittes 121 bereits 300 Sekunden vergangen sind |
| 132 | bejahendenfalls wird die Gas-Fördereinrichtung 90 still gesetzt, da davon ausgegangen werden kann, dass der gewünschte Unterdruck-Aufbau im Tank 1 wegen Undichtigkeit des Volumenveränderungselements 11 nicht erfolgen kann |
| 133 | folglich wird dann das Volumenveränderungselement 11 bzw. der dieses umfassende Teilbereich der Kraftstoffversorgungsanlage als nicht ausreichend dicht eingestuft |
| 134 | wird hingegen im Verfahrensschritt 131 festgestellt, dass die Gas-Fördervorrichtung 90 noch weniger als 300 Sekunden in Betrieb ist, wird ein Zeitzähler für deren Betriebsdauer um den Wert "1" erhöht und es wird im folgenden Verfahrensschritt |
| 135 | die Gas-Fördervorrichtung 90 für eine Sekunde weiter betrieben, wonach zum Verfahrensschritt 122 zurückgegangen wird, in welchem die Abfrage erfolgt, ob der mittels des Drucksensors 19 gemessene Unterdruck im Tank-Innenraum betragsmäßig höher als bspw. 10 Millibar ist |

Im Weiteren wird nun anhand der **Figuren 3****,** **4** eine alternative Ausführungsform der vorliegenden Erfindung erläutert. Vergleicht man Fig.3 mit der zuvor erläuterten Fig.1, so erkennt man insbesondere, dass bei Fig.3 zwei Gas-Fördervorrichtungen 93, 94 vorhanden sind, die jeweils nur eine einzige durch einen nicht näher bezeichneten Pfeil dargestellte Förderrichtung besitzen. Die erste Gas-Fördervorrichtung 93 ist im Leitungsabschnitt 6a zwischen der Speichereinheit 8a und dem Absperrventil 20 angeordnet und kann somit bei geöffnetem Absperrventil 20 Luft aus der Umgebung U in den Tank-Innenraum fördern. Die zweite Gas-Fördervorrichtung 93 ist in der Belüftungsleitung 12 zwischen dem Volumenveränderungselement 11 und dem Absperrventil 21 angeordnet und kann somit bei geöffnetem Absperrventil 21 Luft aus der Umgebung U in das Volumenveränderungselement 11 fördern. Stromab dieser Gas-Fördervorrichtung 92 ist ein Drucksensor 19b zur Messung des bei geschlossenem Absperrventil 21 im Volumenveränderungselement 11 herrschenden Druckes vorgesehen. Der in Fig.1 mit der Bezugsziffer 19 zur Messung des Drucks im Tank-Innenraum trägt bei Fig.3 die Bezugsziffer 19a.

Nach dieser Vor-Erläuterung von Fig.3 wird nun anhand von Figur 4 eine erfindungsgemäße Prozedur zum Überprüfen der Dichtheit des Kraftstoffversorgungsanlage nach Fig.3 beschrieben, die von einer elektronischen Rechen- und Steuereinheit wie folgt durchgeführt wird:

| | |
|---|---|
| 300 | Start der Überprüfungsprozedur, bspw. aufgrund einer Außerbetriebnahme oder Inbetriebnahme des Kraftfahrzeugs oder des Verbrauchers (bzw. Verbrennungsmotors 2) |
| 301 | die Ventileinheit 7, genauer dessen Ventilelement 7a, welches im stromlosen Zustand geschlossen ist, wird geöffnet und das im stromlosen Zustand offene Blase-Absperrventil 21 wird geschlossen, um zu verhindern, dass das Volumenveränderungselement 11 irgendeinen Einfluss auf den nun folgenden Teil des Überprüfungsverfahrens ausübt |
| 302 | die Gas-Fördereinrichtung 93 wird in Betrieb genommen und fördert damit unter anderem durch das stromlos und somit üblicherweise offene Absperrventil 20 Luft aus der Umgebung U in den Innenraum des Kraftstoff-Tanks 1; mit bzw. ab dieser Inbetriebnahme wird auch die zeitliche Betriebsdauer der Gas-Fördereinrichtung 93 gemessen |
| 303 | es wird geprüft, ob der mittels des Drucksensors 19a gemessene Überdruck im Tank-Innenraum größer als bspw. 10 Millibar ist |
| 304 | bejahendenfalls wird das Absperrventil 20 geschlossen und die Gas-Fördereinrichtung 93 still gesetzt |
| 305 | es wird eine vorgegebene Zeitspanne, bspw. in der Größenordnung von 1 Minute, abgewartet |
| 306 | es wird (mittels des Drucksensors 19a) geprüft, ob im Kraftstofftank 1 noch ein Überdruck von (bspw.) zumindest 5 mbar (gegenüber Umgebungsdruck) vorliegt - dieser vorgegebene Betrag, der einen Schwellwert bezüglich des Ergebnisses des Überprüfungsverfahrens darstellt, liegt zwangsläufig geringfügig unter dem im Verfahrensschritt 303 genannten bzw. berücksichtigten Betrag |
| 307 | bejahendenfalls wird zunächst das Absperrventil 20 geöffnet und bspw. eine Sekunde später wird das Ventilelement 7a der Ventileinheit 7 geschlossen sowie das Blase-Absperrventil 21 geöffnet, um den üblichen Betriebszustand wieder herzustellen (sowie den sich an den Verfahrensschritt 308 anschließenden Verfahrensteil vorzubereiten) |
| 308 | damit können der Kraftstoff-Tank 1 sowie die Speichereinheit 8a und die zugehörigen Leitungen einschließlich der Spülleitung 13 als ausreichend dicht eingestuft werden |
| 309 | wird hingegen im Schritt 306 erkannt, dass der Druck im Tank-Innenraum unterhalb des dort vorgegebenen Betrags von bspw. 5 mbar liegt, so wird zwar analog dem Schritt 307 der übliche Betriebszustand wieder hergestellt, aber es kann dann nicht auf Dichtheit geschlossen werden |
| 310 | vielmehr wird dann der den der Kraftstoff-Tank 1 sowie die Speichereinheit 8a und die zugehörigen Leitungen einschließlich der Spülleitung 13 umfassende Teilbereich der Kraftstoffversorgungsanlage als nicht ausreichend dicht eingestuft |
| 311 | falls im Verfahrensschritt 303 festgestellt wird, dass der durch vorhergehende Inbetriebnahme der Gas-Fördervorrichtung 93 erzeugte Überdruck im Tank-Innenraum den gewünschten Wert von bspw. 10 Millibar (noch) nicht erreicht hat, so wird abgefragt, ob die Gas-Fördervorrichtung 93 bereits seit 30 Sekunden in Betrieb ist, d.h. ob seit Ausführung des Verfahrensschrittes 302 bereits 30 Sekunden vergangen sind |
| 312 | bejahendenfalls wird die Gas-Fördereinrichtung 93 still gesetzt, da davon ausgegangen werden kann, dass der gewünschte Druckaufbau im Tank 1 wegen irgendeiner Undichtigkeit nicht erfolgen kann |
| 313 | folglich wird dann der den der Kraftstoff-Tank 1 sowie die Speichereinheit 8a und die zugehörigen Leitungen einschließlich der Spülleitung 13 umfassende Teilbereich der Kraftstoffversorgungsanlage als nicht ausreichend dicht eingestuft |
| 314 | wird hingegen im Verfahrensschritt 311 festgestellt, dass die Gas-Fördervorrichtung 93 noch weniger als 30 Sekunden in Betrieb ist, wird ein Zeitzähler für deren Betriebsdauer um den Wert "1" erhöht und es wird im folgenden Verfahrensschritt |
| 315 | die Gas-Fördervorrichtung 93 für eine Sekunde weiter betrieben, wonach zum Verfahrensschritt 303 zurückgegangen wird, in welchem die Abfrage erfolgt, ob der mittels des Drucksensors 19a gemessene Überdruck im Tank-Innenraum größer als bspw. 10 Millibar ist |

Nunmehr auf den Verfahrensschritt 308 zurückkommend, wird im Weiteren bzw. sich hieran anschließend die Dichtheit des Volumenveränderungselements 11 überprüft. Dies geschieht - im Anschluss an eine erfolgreiche (d.h. ausreichende Dichtheit bescheinigende) Durchführung des Überprüfungsverfahrens für den Kraftstoff-Tank 1 sowie die Speichereinheit 8a und die zugehörigen Leitungen einschließlich der Spülleitung 13 auf weiter oben genannte "direkte" Weise in folgenden Schritten:

| | |
|---|---|
| 320 | die Ventileinheit 7, genauer dessen Ventilelement 7a, welches im stromlosen Zustand geschlossen ist, wird geöffnet, um zu verhindern, dass die Druckverhältnisse im Innenraum des Tanks 1 irgendeinen Einfluss auf den nun folgenden Teil des Überprüfungsverfahrens ausüben |
| 321 | die Gas-Fördereinrichtung 94 wird in Betrieb genommen und fördert damit Luft aus der Umgebung U in den Innenraum des Volumenveränderungselements 11; dabei wird mit bzw. ab dieser Inbetriebnahme auch die zeitliche Betriebsdauer der Gas-Fördereinrichtung 94 gemessen |
| 322 | es wird geprüft, ob ein mittels des Drucksensors 19b stromab der Gas-Fördereinrichtung 94 gemessener Überdruck größer als ein vorgegebener Schwellwert von bspw. 10 Millibar (gegenüber Umgebungsdruck) ist, was nur dann möglich ist, wenn das Volumenveränderungselement 11 zumindest näherungsweise dicht ist |
| 323 | bejahendenfalls wird das Blase-Absperrventil 21 geschlossen und die Gas-Fördereinrichtung 94 still gesetzt |
| 324 | es wird eine vorgegebene Zeitspanne, bspw. in der Größenordnung von 1 Minute, abgewartet |
| 325 | mittels des Drucksensors 19b wird geprüft, ob im Volumenveränderungselement 11 noch ein Überdruck von (bspw.) zumindest 5 mbar (gegenüber Umgebungsdruck) vorliegt - dieser vorgegebene Betrag, der einen Schwellwert bezüglich des Ergebnisses des Überprüfungsverfahrens darstellt, liegt zwangsläufig unter dem im Verfahrensschritt 322 genannten bzw. berücksichtigten Betrag, da etwas Luft auf die Saugseite der Gas-Fördervorrichtung 94 bis zum Blase-Absperrventil 21 gelangen kann |
| 326 | bejahendenfalls wird zunächst das Blase-Absperrventil 21 geöffnet und bspw. eine Sekunde später wird das Ventilelement 7a der Ventileinheit 7 geschlossen, um den üblichen Betriebszustand wieder herzustellen |
| 327 | nachdem im Schritt 325 noch ausreichender Überdruck im Volumenveränderungselement 11 herrscht, kann das Volumenveränderungselement 11 als ausreichend dicht eingestuft werden |
| 328 | die bislang erfolgreiche Überprüfungsprozedur wird damit abgeschlossen, denn es sind gemäß Schritt 308 sowohl der Kraftstoff-Tank 1 sowie die Speichereinheit 8a und die zugehörigen Leitungen einschließlich der Spülleitung 13 als auch (gemäß Schritt 327) das Volumenveränderungselement 11 ausreichend dicht |
| 329 | wird hingegen im Schritt 325 erkannt, dass der Druck im Volumenveränderungselement 11 unterhalb des dort vorgegebenen Grenzwerts von bspw. 5 mbar liegt, d.h. dass beispielsweise nur ein Überdruck von 1 mbar oder sogar Umgebungsdruck herrscht, was im Falle eines undichten Volumenveränderungselements 11 grundsätzlich möglich ist, da dann über den Tank-Innenraum und durch die Leitung 6 die mit der Gas-Fördervorrichtung 94 geförderte Luft 12 in die Umgebung U gelangen kann, so wird zwar analog dem Schritt 326 der übliche Betriebszustand wieder hergestellt, aber es kann dann nicht auf Dichtheit des Volumenveränderungselements 11 geschlossen werden |
| 330 | vielmehr wird dann das Volumenveränderungselement 11 bzw. der dieses umfassende Teilbereich der Kraftstoffversorgungsanlage als nicht ausreichend dicht eingestuft |
| 331 | falls im Schritt Verfahrensschritt 322 festgestellt wird, dass der durch vorhergehende Inbetriebnahme der Gas-Fördervorrichtung 94 erzeugte Überdruck im Volumenveränderungselement 11 den gewünschten Wert von bspw. 10 Millibar nicht erreicht, so wird abgefragt, ob die Gas-Fördervorrichtung 94 bereits seit bspw. 240 Sekunden in Betrieb ist, d.h. ob seit Ausführung des Verfahrensschrittes 321 bereits 240 Sekunden vergangen sind |
| 332 | bejahendenfalls wird die Gas-Fördereinrichtung 94 still gesetzt, da davon ausgegangen werden kann, dass der gewünschte Überdruck-Aufbau im Volumenveränderungselement 11 wegen Undichtigkeit desselben nicht erfolgen kann |
| 333 | folglich wird dann das Volumenveränderungselement 11 bzw. der dieses umfassende Teilbereich der Kraftstoffversorgungsanlage als nicht ausreichend dicht eingestuft |
| 334 | wird hingegen im Verfahrensschritt 331 festgestellt, dass die Gas-Fördervorrichtung 94 noch weniger als 240 Sekunden in Betrieb ist, wird ein Zeitzähler für deren Betriebsdauer um den Wert "1" erhöht und es wird im folgenden Verfahrensschritt |
| 335 | die Gas-Fördervorrichtung 94 für eine Sekunde weiter betrieben, wonach zum Verfahrensschritt 322 zurückgegangen wird, in welchem die Abfrage erfolgt, ob der mittels des Drucksensors 19b gemessene Überdruck im Volumenveränderungselement 11 betragsmäßig höher als bspw. 10 Millibar ist |

## Patentansprüche

1. Verfahren zum Überprüfen der Dichtheit einer Kraftstoffversorgungsanlage eines Kraftfahrzeugs mit einem Kraftstofftank (1), in dessen Innenraum ein Volumenveränderungselement (11) vorgesehenen ist, dessen sog. Ausgleichs-Volumen unter Zwischenschaltung einer Speichereinheit (8b) für gasförmige Kraftstoffbestandteile mit der Umgebung (U) in Verbindung steht, während der mit Kraftstoff für einen Verbraucher (2) befüllbare Innenraum des Kraftstofftanks (1) über eine Ventileinheit (7), welche beim Befüllen des Kraftstofftanks (1) sowie bei Überschreiten eines Überdruck-Grenzwertes in der Größenordnung von bis zu 100 mbar und bei Unterschreiten eines Unterdruck-Grenzwertes zwischen dem Druck im Tank-Innenraum und dem Umgebungsdruck geöffnet und ansonsten geschlossen ist, mit der Umgebung (U) verbindbar ist, wobei mittels einer Gas-Fördervorrichtung (90, 93, 94) sequentiell und somit nicht gleichzeitig
(a) bei gegenüber der Umgebung (U) abgesperrtem Volumenveränderungselement (11) im Tank-Innenraum ein Differenzdruck gegenüber Umgebung erzeugt wird, und
(b) bei nicht gegenüber der Umgebung (U) abgesperrtem Volumenveränderungselement (11) im Volumenveränderungselement (11) oder im Tank-Innenraum ein Differenzdruck gegenüber Umgebungsdruck erzeugt wird,
wobei der erzeugte Differenzdruck aus (a) und der erzeugte Differenzdruck aus (b) durch Schalten geeigneter Absperrventile (20, 21) gehalten und über eine gewisse Zeitspanne überwacht oder nach einer gewissen Zeitspanne kontrolliert wird, und wobei dann, wenn der Differenzdruck nach dieser Zeitspanne noch einen gewissen Schwellwert überschreitet, auf eine ausreichende Dichtheit der Kraftstoffversorgungsanlage geschlossen wird.

2. Verfahren nach Anspruch 1, wobei durch geeignetes Schalten geeigneter Ventile (20, 21) in einem ersten Schritt der Tank-Innenraum einschließlich einer Speichereinheit (8a) für aus diesem abgeführte gasförmige Kraftstoffbestandteile mit zugehörigen Leitungs-Abschnitten und einschließlich einer zum Verbraucher (2) führenden Spülluftleitung (13) für diese Speichereinheit (8a) durch Aufbau eines Differenzdruckes auf Dichtheit geprüft wird, und wobei in einem zweiten Schritt das Volumenveränderungselement (11) mit zugehörigem Luft-Leitungsabschnitt durch Aufbau eines Differenzdruckes auf Dichtheit geprüft wird.

3. Verfahren nach Anspruch 1 oder 2, wobei der jeweilige Differenzdruck zu (a) und (b) mittels einer einzigen Gas-Fördervorrichtung (90) aufgebaut wird.

4. Verfahren nach Anspruch 3, wobei die Förderrichtung (91, 92) der Gas-Fördervorrichtung (90) zwischen dem Differenzdruck-Aufbau zu (a) und zu (b) umgekehrt wird.

5. Verfahren nach Anspruch 1 oder 2, wobei für den Aufbau des Differenzdruckes im Tank-Innenraum und im Volumenveränderungselement (11) jeweils eine eigenständige Gas-Fördervorrichtung (93, 94) verwendet wird.

6. Verfahren nach einem der vorangegangenen Ansprüche, wobei dann, wenn nach einer vorgegebenen Betriebsdauer der Gas-Fördervorrichtung (90, 93, 94) ein vorgegebener Differenzdruck nicht erreicht ist, auf nicht ausreichende Dichtheit geschlossen wird.

## Claims

1. A method for testing the leak-tightness of a fuel supply system of a motor vehicle having a fuel tank (1), in the interior of which a volume-changing element (11) is provided, the so-called compensation volume of which is connected to the surroundings (U) with a storage unit (8b) for gaseous fuel constituents being positioned in-between, whereas the interior of the fuel tank (1), which is fillable with fuel for a consumer (2), is connectable to the surroundings (U) by way of a valve unit (7), which is opened during filling of the fuel tank (1) and in the event that a positive-pressure threshold value in the order of up to 100 mbar is exceeded and in the event that a negative-pressure threshold value between the pressure in the tank interior and the ambient pressure is undershot, and is otherwise closed, wherein, by means of a gas-conveying device (90, 93, 94), sequentially and therefore not simultaneously,
(a) a differential pressure in relation to the surroundings is generated in the tank interior with the volume-changing element (11) shut off with respect to the surroundings (U), and
(b) a differential pressure in relation to ambient pressure is generated in the volume-changing element (11) or in the tank interior with the volume-changing element (11) not shut off with respect to the surroundings (U),
wherein the generated differential pressure from (a) and the generated differential pressure from (b) are held by switching of suitable shut-off valves (20, 21) and are monitored over a certain period of time, or are inspected after a certain period of time, and wherein if the differential pressure still exceeds a certain threshold value after this period of time, the leak-tightness of the fuel supply system is deemed to be adequate.

2. A method according to claim 1, wherein, by suitable switching of suitable valves (20, 21), in a first step the tank interior, inclusive of a storage unit (8a) for gaseous fuel constituents discharged therefrom, together with associated line sections and inclusive of a purge air line (13), leading to the consumer (2), for this storage unit (8a), is checked for leak-tightness through a build-up of a differential pressure, and wherein in a second step the volume-changing element (11) with an associated air line section is checked for leak-tightness through a build-up of a differential pressure.

3. A method according to claim 1 or 2, wherein the differential pressures for (a) and (b) are built up by means of a single gas-conveying device (90).

4. A method according to claim 3, wherein the conveying direction (91, 92) of the gas-conveying device (90) is reversed between the build-up of the differential pressures for (a) and (b).

5. A method according to claim 1 or 2, wherein a separate gas-conveying device (93, 94) is used for the build-up of the differential pressure in each of the tank interior and the volume-changing element (11).

6. A method according to any one of the preceding claims, wherein, if a predefined differential pressure has not been reached after a predefined operating duration of the gas-conveying device (90, 93, 94), the leak-tightness is deemed to be inadequate.

## Revendications

1. Procédé permettant de contrôler l'étanchéité d'une installation d'alimentation en carburant d'un véhicule comprenant un réservoir de carburant (1) dans le volume interne duquel est prévu un élément de modification du volume (11) dont le volume d'équilibrage est en liaison avec l'environnement (U) avec interposition d'une unité d'accumulation (8b) des composants gazeux du carburant, tandis que le volume interne du réservoir de carburant (1) pouvant être rempli de carburant destiné à un consommateur (2) peut être relié à l'environnement (U) par l'intermédiaire d'une unité de soupape (7), qui est ouverte lors du remplissage du réservoir de carburant (1), et lorsque la pression entre le volume interne du carburant et la pression environnante dépasse une valeur limite de surpression de l'ordre de jusqu'à 100 mbar et passe au-dessous d'une valeur limite de dépression située, et est si non fermée,
selon lequel, au moyen d'un dispositif de refoulement de gaz (90, 93, 94), de façon séquentielle, et ainsi pas simultanément,
a) lorsque l'élément de modification du volume (11) est fermé par rapport à l'environnement (U) on produit dans le volume interne du réservoir une pression différentielle par rapport à l'environnement, et
b) lorsque l'élément de modification du volume n'est pas fermé par rapport à l'environnement (U), on produit dans l'élément de variation de volume (11) ou dans le volume interne (11) du réservoir une pression différentielle par rapport à l'environnement,
la pression différentielle produite dans le cas (a) et la pression différentielle produite dans le cas (b) étant maintenues par commutation de soupapes d'arrêt (20, 21) adaptées, et surveillées pendant un intervalle de temps donné ou contrôlées après un intervalle de temps donné, et lorsque après cet intervalle de temps la pression différentielle dépasse encore une valeur de seuil donnée on conclut à une étanchéité suffisante de l'installation d'alimentation en carburant.

2. Procédé conforme à la revendication 1,
selon lequel, par commutation adaptée de soupapes (20, 21) adaptées dans une première étape, l'étanchéité du volume interne du réservoir, y compris une unité d'accumulation (8a) des composants gazeux du carburant évacués de celui-ci avec des segments de conduite associés et y compris une conduite d'air de balayage (13) conduisant au consommateur (2) de cette unité d'accumulation (8a) est contrôlée par établissement d'une pression différentielle, et dans une seconde étape, l'étanchéité de l'élément de modification du volume (11) avec le segment de conduite d'air associé est contrôlée par établissement d'une pression différentielle.

3. Procédé conforme à la revendication 1 ou 2,
selon lequel, les pressions différentielles respectives dans le cas (a) et dans le cas (b) sont établies au moyen d'un dispositif de refoulement de gaz (90) unique.

4. Procédé conforme à la revendication 3,
selon lequel, la direction de refoulement (91, 92) du dispositif de refoulement du gaz (90) est inversée entre l'établissement de la pression différentielle dans le cas (a) et l'établissement de la pression différentielle dans le cas (b).

5. Procédé conforme à la revendication 1 ou 2,
selon lequel, pour établir la pression différentielle dans le volume interne du réservoir et dans l'élément de modification du volume (11) on utilise respectivement un dispositif de refoulement du gaz (93, 94) indépendant.

6. Procédé conforme à l'une des revendications précédentes,
selon lequel, lorsque après une durée de fonctionnement prédéfinie du dispositif de refoulement du gaz (90, 93, 94), une pression différentielle prédéfinie n'est pas atteinte, on conclut à une étanchéité insuffisante.
